# EUROPEAN PATENT APPLICATION

(11) **EP 4 052 577 A1**
(43) Date of publication of application: **07.09.2022**
(21) Application number: 21160963.1
(22) Date of filing: 05.03.2021
(51) Int. Cl.: A01N 63/20, A01N 65/03, A01P 21/00

(54) **USE OF MICROALGAE**

(71) Applicant: AlgiMatter B.V., 5928 RH Venlo (NL)
(72) Inventor: Borm, Paulus Josephus Aloisius, 6231 CV Meerssen (NL); Schiffeleers, Steven Elisabeth Leonarda Margaretha, 6231 CV Meerssen (NL); Klosse, Peter Ronald, 6231 CV Meerssen (NL); Klosse, Boudewijn Antonius Gabriël, 6231 CV Meerssen (NL)
(74) Representative: Renkema, Jaap

(57) **Abstract**

The invention relates to use of microalgae for suppressing the production of sugar in grapes during the ripening of the grapes. The invention further relates to a process for growing grapes comprising: a) applying, during the ripening of the grapes, an aqueous composition comprising cells of microalgae and/or an extract of microalgae to the grapes, the leaves, other parts of the grapevines and/or the soil in which the grapevines are rooted and b) harvesting the grapes, and a process for making wine comprising the process for growing grapes.

## Description

The present invention relates to use of microalgae. The invention further relates to a process for growing grapes and a process for making wine.

Current climate change with its effects on water supplies, shift of growth seasons along with shorter ripening periods at higher mean temperatures poses agriculture for huge challenges. Ripening periods of crops become shorter with the risk that flavor, taste and quality of products are affected.

In order to maintain the ripening cycle in current setting, wine growers are acquiring land in cooler climates (e.g. champagne houses) or harvesting early. There is therefore a demand for a method to optimize the timing of harvest of grapes without having to grow grapes in cooler climates.

It is an objective of the present invention to provide a solution in which the above-mentioned and/or other demands are met.

Accordingly, the present invention provides use of microalgae for suppressing the production of sugar in grapes during the ripening of the grapes.

It was surprisingly found that the application of microalgae to the grapevines results in the grapes having a lower sugar level compared to the grapes of the grapevines to which no microalgae is applied. Further surprisingly, the suppression of the production of sugar stops shortly after the application of microalgae is stopped. Accordingly, the final sugar level of the grapes of the microalgae-treated grapevines may reach the same sugar level as the grapes of the non-treated grapevines by allowing a longer period of ripening.

Thus, according to the invention, the ripening of grapes can advantageously be controlled to optimize the timing of harvest of the grapes as well as the final sugar level of the grapes. Further advantageously, the microalgae do not have known adverse effects to soils. Wines may be made from the grapes accordingly obtained.

The present invention provides use of microalgae for suppressing the production of sugar in grapes during the ripening of the grapes to delay the timing of harvest of the grapes.

The present invention provides use of microalgae for suppressing the production of sugar in grapes during the ripening of the grapes to obtain grapes with a low sugar level.

The present invention provides use of microalgae for suppressing the production of sugar in grapes during the ripening of the grapes to delay the timing of harvest of the grapes without lowering the sugar level in the harvested grapes.

The present invention provides use of microalgae for suppressing the production of sugar in grapes during the ripening of the grapes to obtain grapes with a low sugar level without delaying the timing of harvest of the grapes.

The present invention provides use of microalgae for suppressing the production of sugar in grapes during the ripening of the grapes to delay the timing of harvest of the grapes and lowering the sugar level in the harvested grapes.

It is noted that various uses of microalgae are known. For example, Amaro H, Guedes AC, Malcata FX (2011) Antimicrobial activities of microalgae: an invited review. In: Science against microbial pathogens: communicating current research and technological advances AMendez-Vilas (ed), Formatex, 2011, discloses that an extract of some types of microalgae has antibacterial, antiviral and antifungal effects. US2007232494A describes the use of ulvans or oligi-saccharide derivatives extracted from green algae (ulva, and Enteromorpha) as activators of plants defense and resistance reactions against biotic and abiotic stress. EP253035A1 discloses that a product based on algae and aluminum chloride treats bacterial and fungal diseases of plants, for example powdery mildew of grapevines. However, none of these documents discloses that microalgae can be used for suppressing the production of sugar in grapes during the ripening of the grapes.

It was further surprisingly discovered that use of microalgae according to the invention results in an increase in concentrations of Ca, K, Mg, Na, NH₄, N, Si and/or P in the grapes. Accordingly, in one aspect, the invention further provides use of microalgae for suppressing the production of sugar in grapes and increasing concentrations of Ca, K, Mg, Na, NH₄, N, Si and/or P in the grapes during ripening of the grapes.

The sugar level of the grapes may be determined in terms of Oechsle scale by known methods.

Preferably, the microalgae is selected from the group consisting of Chlorella Vulgaris, Hydrodictyon reticulatum, Schizomeris leibleinii, Spirogyra plena, Plectonema gracillimum, Chlorella protothecoides and Gracilaria confervoides.

Preferably, the microalgae is in the form of an aqueous composition comprising cells of microalgae and/or an extract of microalgae. The aqueous composition may be applied to the grapes, the leaves, other parts of the grapevines and/or the soil in which the grapevines are rooted. Preferably, the aqueous composition is applied at least to the grapes and/or the leaves, most preferably at least to the grapes.

Accordingly, the present invention provides the use according to the invention by applying, during the ripening of the grapes, an aqueous composition comprising cells of microalgae and/or an extract of microalgae to the grapes, the leaves, other parts of the grapevines and/or the soil in which the grapevines are rooted.

The present invention further provides a process for growing grapes comprising:
a) applying, during the ripening of the grapes, an aqueous composition comprising cells of microalgae and/or an extract of microalgae to the grapes, the leaves, other parts of the grapevines and/or the soil in which the grapevines are rooted and
b) harvesting the grapes.

The present invention further provides a process for making wine comprising the process for growing grapes comprising
a) applying, during the ripening of the grapes, an aqueous composition comprising cells of microalgae and/or an extract of microalgae to the grapes, the leaves, other parts of the grapevines and/or the soil in which the grapevines are rooted and
b) harvesting the grapes and
processing the harvested grapes into the wine.

By suitably adjusting the period of step a), the process according to the invention allows harvesting grapes with a low sugar level and make wine with a lower alcohol level.

Herein, cells of microalgae means cells comprising intracellular materials within their cell membranes. Extract of microalgae means intracellular materials which came outside of the cell membranes of microalgae cells, which may have resulted by known extraction processes of microalgae that damage the cell membranes.

For example, the aqueous composition may be a supernatant of an aqueous system culturing microalgae or such supernatant diluted with water. The supernatant may be the residual product formed of microalgae and the incubation medium after harvesting the microalgae from the aqueous system. The supernatant may be obtained from an aqueous system culturing microalgae e.g. by microfiltration or by sampling after sedimentation taking care not to draw settled materials from the bottom of the system. During this process or the culturing process, the cell membranes of some cells of microalgae may break and intracellular materials may be caused to be present in the aqueous composition outside of the cell membranes. Examples of the intracellular materials of microalgae are well-known in the art, for example as described in Carl Safi, Bachar Zebib, Othmane Merah, Pierre-Yves Pontalier, Carlos Vaca-Garcia. Morphology, composition, production, processing and applications of Chlorella vulgaris: A review. Renewable and Sustainable Energy Reviews, Elsevier, 2014, 35, pp.265-278. The supernatant typically comprises both the cells of microalgae and the extract of microalgae. The weight ratio between the cells and the extract depends on the severity of the process for obtaining the supernatant.

The use of such supernatant of an aqueous system culturing microalgae is particularly advantageous, since such supernatant is often treated as a waste.

The aqueous system for culturing microalgae comprises an incubation medium. The incubation medium may or may not be added with carbohydrates. An incubation medium particularly suitable for phototrophically culturing Chlorella Vulgaris is a phosphate buffered medium containing iron (< 1 µM), boron (10 µM) and EDTA (< 10 µM) with trace metals consisting of a mix of Zn, Mn, Mo, Cu and Co in concentrations between 0.1 and 2 µM.

The supernatant may comprise chlorophyll, proteins and/or carbohydrates derived from microalgae.

Preferably, the supernatant comprises chlorophyll A and chlorophyll B at a total concentration of 0.10 to 1.00 mg/mL with respect to the supernatant, preferably 0.20 to 0.50 mg/mL with respect to the supernatant, as determined by UV-VIS Spectrophotometry. The ratio between chlorophyll A and chlorophyl B may e.g. be 5:1 to 1:5 or 1:1 to 1:3.

Preferably, the supernatant comprises proteins at a concentration of 0.2 to 3.0 mg/mL with respect to the supernatant, as determined by Bradford protein assay.

Preferably, the supernatant comprises carbohydrates at a concentration of 10 to 200 mg/mL, for example 50 to 100 mg/mL, with respect to the supernatant, wherein the concentrations are the total of the concentrations of fucose, arabinose, rhamnose, galactose, glucose, xylose, mannose, d-galacturonic acid and glucuronic acid after acid hydrolysis. Typically, at least 95%, at least 98%, at least 99% or at least 99.5% of the carbohydrates is glucose.

The supernatant may be used without substantially changing the concentrations of the relevant components or after changing the concentrations of the relevant components. Preferably the supernatant is diluted to obtain the aqueous composition to be applied to the grapes. For example, the supernatant may be diluted in water at a ratio of 100 to 1000 (1 mL of the supernatant is diluted by water to obtain 100 to 1000 mL of the aqueous composition).

The supernatant or the algae culture may be converted into a paste by suitable thickening process. The paste may be suspended to obtain the aqueous composition to be used according to the invention.

The supernatant or the algae culture may be converted into powder by freeze drying. The powder may be dissolved or suspended in an aqueous medium to obtain the aqueous composition to be used according to the invention.

Preferably, the aqueous composition comprises chlorophyll A and chlorophyl B at a total concentration of 0.10 µg/mL to 0.01 mg/mL, preferably 1.0 µg/mL to 0.01 mg/mL, with respect to the aqueous composition, as determined by UV-VIS Spectrophotometer.

Preferably, the aqueous composition comprises proteins at a concentration of 0.20 µg/mL to 0.03 mg/mL, preferably 2.0 µg/mL to 0.02 mg/mL, with respect to the aqueous composition, as determined by Bradford protein assay.

Preferably, the aqueous composition comprises carbohydrates at a concentration of 0.1 to 2 mg/mL, for example 0.5 to 1 mg/mL, with respect to the aqueous composition, wherein the concentrations are the total of the concentrations of fucose, arabinose, rhamnose, galactose, glucose, xylose, mannose, d-galacturonic acid and glucuronic acid determined after acid hydrolysis.

Preferably, the aqueous composition is applied to the grapes, the leaves, other parts of the grapevines and/or the soil in which the grapevines are rooted at doses between 100 to 1000 mL per plant.

Preferably, the aqueous composition is applied to the grapes, the leaves, other parts of the grapevines and/or the soil in which the grapevines are rooted such that the total amount of chlorophyll A and chlorophyl B applied per plant per application is 0.01 mg to 1.0 mg, preferably 0.05 to 0.50 mg.

The frequency of the application may e.g. be between once every two weeks to twice a week, for example once a week. The application may be between flowering and harvest season and may last 8 to 12 weeks.

The aqueous composition may comprise further components in addition to the components present in the aqueous system culturing microalgae.

Preferably, the aqueous composition further comprises a thickening agent. This advantageously increases contact between the composition and target. The thickening agent may be an inorganic thickening agent or a polymeric thickening agent. The inorganic thickening agent may be selected from zeolites, kaolinites and bentonite. Such aqueous composition may be prepared by the extraction process as described above followed by an addition of the thickening agent.

As microalgae does not have known adverse effects like with some inorganic additives, microalgae can be used safely. For example, aluminum chloride is toxic to the soil and copper sulphate reduces biodiversity in the soil while causing adverse, toxicological responses in mammals.

Preferably, microalgae is used without aluminum chloride according to the invention. Preferably, the aqueous composition is substantially free of aluminum chloride. The aqueous composition comprises aluminum chloride at an amount of at most 0.1 µg/L, preferably at most 0.001 µg/L.

Preferably, microalgae is used without copper sulphate according to the invention. Preferably, the aqueous composition is substantially free of copper sulphate. The aqueous composition comprises copper sulphate at an amount of at most 0.1 µg/L, preferably at most 0.001 µg/L.

It is noted that the invention relates to the subject-matter defined in the independent claims alone or in combination with any possible combinations of features described herein, preferred in particular are those combinations of features that are present in the claims. It will therefore be appreciated that all combinations of features relating to the composition according to the invention; all combinations of features relating to the process according to the invention and all combinations of features relating to the composition according to the invention and features relating to the process according to the invention are described herein.

It is further noted that the term 'comprising' does not exclude the presence of other elements. However, it is also to be understood that a description on a product/composition comprising certain components also discloses a product/composition consisting of these components. The product/composition consisting of these components may be advantageous in that it offers a simpler, more economical process for the preparation of the product/composition. Similarly, it is also to be understood that a description on a process comprising certain steps also discloses a process consisting of these steps. The process consisting of these steps may be advantageous in that it offers a simpler, more economical process.

When values are mentioned for a lower limit and an upper limit for a parameter, ranges made by the combinations of the values of the lower limit and the values of the upper limit are also understood to be disclosed.

The invention is now elucidated by way of the following examples, without however being limited thereto.

### Experiment set 1

*Chlorella vulgaris* was cultured in in a buffer composition in a closed photobioreactor as a recirculating culture system between 60 and 80 % sunlight transmission, CO₂ sequestration (1.7kg - 2.8 kg CO₂ per 1 kg of algae) and addition of nitrogen and phosphorus. No carbohydrates were added to the incubation medium. The incubation medium was a phosphate buffered medium containing iron (< 1 µM), boron (10 µM) and EDTA (< 10 µM) with trace metals consisting of a mix of Zn, Mn, Mo, Cu and Co in concentrations between 0.1 and 2 µM.

An aqueous supernatant (residual product) from *Chlorella vulgaris* was sampled at room temperature by centrifugation taking care not to draw settled materials from the bottom of the system. The supernatant was green in color and contained intracellular materials of microalgae cells such as chlorophyll A, chlorophyl B, oligosaccharides and proteins.

The concentration of chlorophyll A and chlorophyll B in the supernatant was 0.086 mg/ml and 0.223 mg/mL, respectively, as determined by UV-VIS Spectrophotometer.

The concentration of the proteins in the supernatant was 1.7 mg/mL as determined by Bradford protein assay.

The concentrations of fucose, arabinose, rhamnose, galactose, glucose, xylose, mannose, d-galacturonic acid and glucuronic acid in the supernatant were determined after acid hydrolysis. The concentration of fucose, arabinose and glucose was 0.04 mg/mL, 0.02 mg/mL and 74.38 mg/mL, respectively. The concentrations of rhamnose, galactose, xylose, mannose, d-galacturonic acid and glucuronic acid was 0.00 mg/mL. As no carbohydrates were added during culturing, it is understood that the carbohydrates are endogenously produced sugars due to photosynthesis.

2.5 mL of the aqueous supernatant was diluted in 1 L of water to obtain the aqueous composition to be sprayed. The aqueous composition was sprayed at a weekly amount of 150 mL/plant to the leaves of Chardonnay grapes once per week from flowering to harvest (10-12 weeks).

The experiment was performed by spraying the aqueous composition to a row of grapevines planted at different altitudes. A row of control grapevines adjacent to the treated vines (same altitude) was treated with water. The levels of sugar in the harvested grapes from the supernatant treated grapevine and the water treated grapevine were determined in terms of Oechsle scale one day before harvest.

The grapes of the grapevine treated with the aqueous composition had an average value of 8 in Oechsle scale whereas the grapevine treated with water had an average value of 12 in Oechsle scale.

Further, several grapevines planted at a higher altitude than in the above-described experiment were treated with the aqueous composition. The dose was half of the above-described experiment, i.e. a weekly amount of 75 mL/plant. A row of control grapevines adjacent to the treated vines (same altitude) was treated with water, in a similar manner as in the above-described experiment. The grapes of the grapevine treated with the aqueous composition had an average value of 11 in Oechsle scale whereas the grapevine treated with water had an average value of 13.5 in Oechsle scale.

It can be understood that the application of the aqueous composition resulted in decrease of the sugar content of the harvested grapes. A higher amount of the aqueous composition resulted in a larger decrease of the sugar content of the grapes, thus a dose-response effect was noted.

### Experiment set 2

In the same vineyard as in Experiment set 1, a similar treatment was performed on the grapevines but the treatment was stopped during the ripening period.

On the day that the treatment was stopped, the grapes of the grapevines on which the treatment with the aqueous composition was performed had an average of about 8 in Oechsle scale, while the grapes of the grapevines treated with water had an average value of about 12 in Oechsle scale.

The sugar level of the grapes of the grapevines on which the aqueous composition treatment was stopped was determined for the next 10 days. The sugar level increased with time and reached an average value of about 12 in Oechsle scale after 10 days. No difference was observed in this respect between the grapevines treated with a high dose and a low dose of the aqueous supernatant.

### Experiment set 3

Young vines (Chardonnay, Sauvignon Gris and mixed hybrid races) in cool climate were randomized and treated weekly between June 25^{th} and October 1^{st} (2015) with the aqueous composition described in Experimental set 1 at different (6 and 12 kg/ha) doses until complete ripeness of the grapes. After harvest (October) the leaves were picked on October 7^{th} and analyzed immediately for pH, elemental carbon, sugars and mineral content in the leaves.

The treatment with microalgae led to the decrease of sugar levels in the leaves. For the leaves treated with a high dosage of microalgae, the sugar level was about 60 to 80% of the sugar level of the leaves treated with water. For the leaves treated with a lower dosage of microalgae, the difference was smaller.

The treatment with microalgae led to the increase in the concentrations of Ca, K, Mg, Na, NH₄, N, Si and P in the leaves. The increase was larger for the leaves treated with a high dosage of microalgae.

## Claims

1. Use of microalgae for suppressing the production of sugar in grapes during the ripening of the grapes.

2. The use according to claim 1, wherein the use is for delaying the timing of harvest of the grapes.

3. The use according to any one of the preceding claims, wherein the use is for obtaining grapes with a low sugar level.

4. The use according to any one of the preceding claims, wherein the use is further for increasing concentrations of Ca, K, Mg, Na, NH₄, N, Si and/or P in the grapes.

5. The use according to any one of the preceding claims, wherein the microalgae is selected from the group consisting of Chlorella Vulgaris, Hydrodictyon reticulatum, Schizomeris leibleinii, Spirogyra plena, Plectonema gracillimum, Chlorella protothecoides and Gracilaria confervoides.

6. The use according to any one of the preceding claims by applying, during the ripening of the grapes, an aqueous composition comprising cells of microalgae and/or an extract of microalgae to the grapes, the leaves, other parts of the grapevines and/or the soil in which the grapevines are rooted.

7. The use according to claim 6, wherein the aqueous composition is or comprises a supernatant of an aqueous system culturing microalgae.

8. The use according to claim 7, wherein the supernatant comprises chlorophyll A and chlorophyll B at a total concentration of 0.10 to 1.00 mg/mL with respect to the supernatant, preferably 0.20 to 0.50 mg/mL with respect to the supernatant, as determined by spectrophotometry, and/or the supernatant comprises proteins at a concentration of 0.2 to 3.0 mg/mL with respect to the supernatant, as determined by Bradford protein assay.

9. The use according to claim 7 or 8, wherein the aqueous composition is obtained by providing the supernatant, thickening the supernatant into a paste and diluting the paste or by providing the supernatant, freeze drying the supernatant into powder and dissolving or suspending the powder in an aqueous medium.

10. The use according to any one of claims 6-9, wherein the aqueous composition comprises chlorophyll A and chlorophyl B at a total concentration of 0.10 µg/mL to 0.01 mg/mL with respect to the aqueous composition, as determined by spectrophotometry, and/or the aqueous composition comprises proteins at a concentration of 0.20 µg/mL to 0.03 mg/mL with respect to the aqueous composition, as determined by Bradford protein assay.

11. The use according to any one of claims 6-10, wherein the aqueous composition further comprises an inorganic thickening agent and/or a polymeric thickening agent, preferably wherein the inorganic thickening agent is selected from zeolites, kaolinites and bentonite.

12. The use according to any one of claims 6-11, wherein the aqueous composition is applied at doses between 100 to 1000 mL per plant, wherein the application is performed at a frequency of between once every two weeks to twice a week, for example once a week.

13. The use according to any one of the preceding claims, wherein the microalgae is used without aluminum chloride and without copper sulphate.

14. A process for growing grapes comprising:
a) applying, during the ripening of the grapes, an aqueous composition comprising cells of microalgae and/or an extract of microalgae to the grapes, the leaves, other parts of the grapevines and/or the soil in which the grapevines are rooted and
b) harvesting the grapes.

15. A process for making wine comprising the process according to claim 14 and processing the harvested grapes into the wine.
